# EUROPEAN PATENT APPLICATION

(11) **EP 2 138 591 A1**
(43) Date of publication of application: **30.12.2009**
(21) Application number: 09162116.9
(22) Date of filing: 05.06.2009
(51) Int. Cl.: C21D 1/613, C21D 9/08, C21D 9/22, A47J 42/10, A47J 42/20, B02C 4/30, C23C 8/22, C23C 8/26, C23C 8/32, C21D 1/06

(54) **Use of a treatment process on coffee mills and coffee mill thus treated**

(30) Priority: 09.06.2008 IT MI20081042
(71) Applicant: Masnari, Marco, 24051 Antegnate (BG) (IT); Benetello, Andrea, 35126 Padova (PD) (IT)
(72) Inventor: Masnari, Marco, 24051 Antegnate (BG) (IT); Benetello, Andrea, 35126 Padova (PD) (IT)
(74) Representative: De Ros, Alberto

(57) **Abstract**

The present invention essentially relates to the use of a treatment process on coffee mills; said process comprises a gas-quenching step typically preceded by a low-pressure case-hardening step; this considerably improves the quality of coffee mills and of the coffee powder obtained therefrom.

## Description

The present invention relates to the use of a treatment process on coffee mills and to coffee mills thus treated.

Coffee mills are used for preparing coffee powder from roasted coffee beans; said powder is then used for preparing a coffee beverage; the grinding process is extremely important for obtaining a high-quality coffee beverage.

These mills are installed and rotate inside apparatuses generally known as "coffee grinders"; coffee grinders can be subdivided into two main categories; household coffee grinders, designed for grinding small quantities of coffee in terms of both daily usage (0-100 g) and total usage (1-10 Kg); and professional coffee grinders (e.g. as used in bars), which are designed for grinding large quantities of coffee in terms of both daily usage (1-10 Kg) and total usage (100-1,000 Kg).

The service life of the mills used in household coffee grinders, although treated, is essentially related to the material they are made of (usually steel for general use or high-speed steel, like the so-called "AVP" steel).

On the other hand, the mills used in professional coffee grinders are quite different as concerns both the material they are made of and the treatments they are subjected to. Such mills are manufactured by using high-quality steel having characteristics that ensure good grinding performance over time. De facto, these mills are first case-hardened, then quenched, and finally accurately cleaned; the case-hardening step is carried out by exposing the mills to a gas having a high carbon monoxide [CO] content; the quenching step is carried out by submerging the mills into mineral oil baths; the cleaning step is carried out by using suitable liquids or, more often, by using industrial ultrasound washing systems.

The mills thus treated allow to obtain good-quality coffee powder and have a long service life.

However, the Applicants have realized that the quality of the coffee powder could be much improved, especially in terms of powder contents.

In fact, they have realized oil-quenching leaves residues on the machine surfaces (notwithstanding the subsequent cleaning step), which residues will then come off during the grinding processes, thus ending up into the coffee powder; the detachment of these residues is neither slow nor gradual, since it occurs through (relatively) big particles coming off at unpredictable times; therefore, even an initial mill break-in period will not solve this problem.

Moreover, carbon-monoxide case-hardening inevitably causes small areas of iron oxide to form within the mill's surface layer. In turn, such areas cause (relatively) big particles (of steel and/or iron oxide) to come off the mill at unpredictable times during the grinding process, which particles will then end up into the coffee powder; in this case as well, an initial mill break-in period may not solve this problem.

It is therefore the object of the present invention to overcome the drawbacks of the

### prior art.

Said object is achieved by subjecting coffee mills to a particular treatment process as set out in the appended claims.

A first important technical feature of the present invention is the execution of a gas-quenching step, which prevents the formation of residues caused by quenching oil.

A second important technical feature of the present invention is the execution of a low-pressure case-hardening step, which prevents the formation of iron oxide caused by oxygen. It should be noted that this second feature is a technical teaching independent of the first one and having autonomous value.

According to further aspects, the present invention also relates to coffee mills and to a coffee grinding apparatus.

In general, the present invention provides for treating coffee mills by means of a process that comprises a gas-quenching step.

The quenching gas may be nitrogen or hydrogen or helium or argon or a mixture thereof, and contains substantially no oxygen.

The quenching gas may be at a pressure between 5 and 40 bar, more in particular at a pressure between 10 and 20 bar, and/or at a temperature between 0°C and 50°C, in particular at room temperature.

Typically and very advantageously, the present invention provides for treating coffee mills by means of a process that also comprises a low-pressure case-hardening step prior to the quenching step.

Said mills are made of steel and preferably have a substantially uniform carbon content below 0.2 % before the treatment process and, more in particular, before the case-hardening step.

The case-hardening step is carried out at high temperature, in particular at a temperature higher than AC3 and lower than 1250°C, more in particular at a temperature between 900°C and 1050°C.

During the case-hardening step there is typically an high initial pressure reduction, in particular to a value between 0.1 mbar and 0.0001 mbar, more in particular to a value between 0.01 mbar and 0.001 mbar.

Preferably, the case-hardening step uses hydrocarbons as carbon carriers, in particular propane and/or ethylene and/or acetylene, without using any oxygen or compounds thereof.

In general, the coffee mills according to the present invention feature a surface layer obtained through a treatment process as defined above.

Said layer may have a thickness between 0.1 mm and 1.0 mm, preferably between 0.5 mm and 0.8 mm, and is located in at least one toothed region of the mill.

A mill according to the present invention will typically comprise a first toothed region with teeth so arranged and shaped as to crush the coffee beans, and a second toothed region with teeth so arranged and shaped as to pulverize the previously crushed coffee beans.

The treatment process according to the present invention may be used on both flat mills and cone mills (whether male or female type); however, since professional coffee grinders usually employ flat mills, said treatment process especially applies to this latter type of mills.

In general, the coffee grinding apparatus according to the present invention will comprise at least one mill as defined above.

The present invention will become more apparent from the following description and from the annexed drawings, wherein:
Figs.1 show two different views of a first embodiment of a flat mill according to the present invention,
Figs.2 show two different views of a second embodiment of a male cone mill according to the present invention, and
Figs.3 show two different views of a third embodiment of a female cone mill according to the present invention.

Said description and said drawings are to be considered as non-limiting examples.

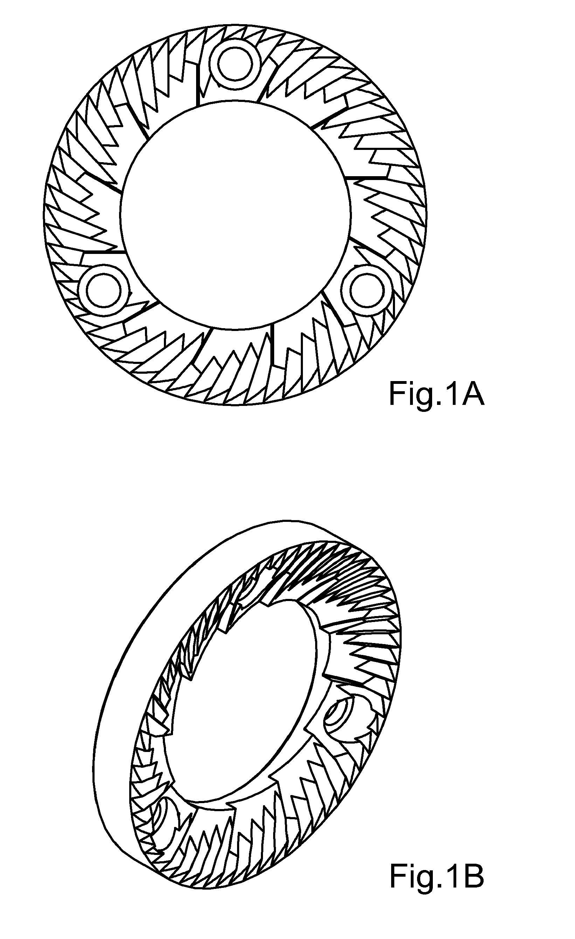

The mill of Fig.1 is a flat mill. It is obtained from a rather thin steel disc with a hole at the centre. It has two toothed regions arranged on a slightly tapered surface: the first toothed region has teeth so arranged and shaped as to crush the coffee beans; the second toothed region has teeth so arranged and shaped as to pulverize the previously crushed coffee beans. Both the teeth in the first toothed region and the teeth in the second toothed region are arranged circumferentially in a contiguous manner; the number of pulverizing teeth (sixty in the example of Fig.1) is in particular a multiple (five in the example of Fig.1) of the number of crushing teeth (twelve in the example of Fig.1); the first toothed region is closer to the disc axis than the second toothed region, being in particular adjacent to the latter. Fig.1 also shows a number of mill mounting holes (though the mill may be mounted in alternative ways as well).

In coffee grinding apparatuses, mills of the type shown in Fig.1 are typically used in pairs, one facing the other coaxially, and reciprocally rotated; coffee beans enter axially through the big central hole, and coffee powder exits radially through a thin annular gap between the two mills.

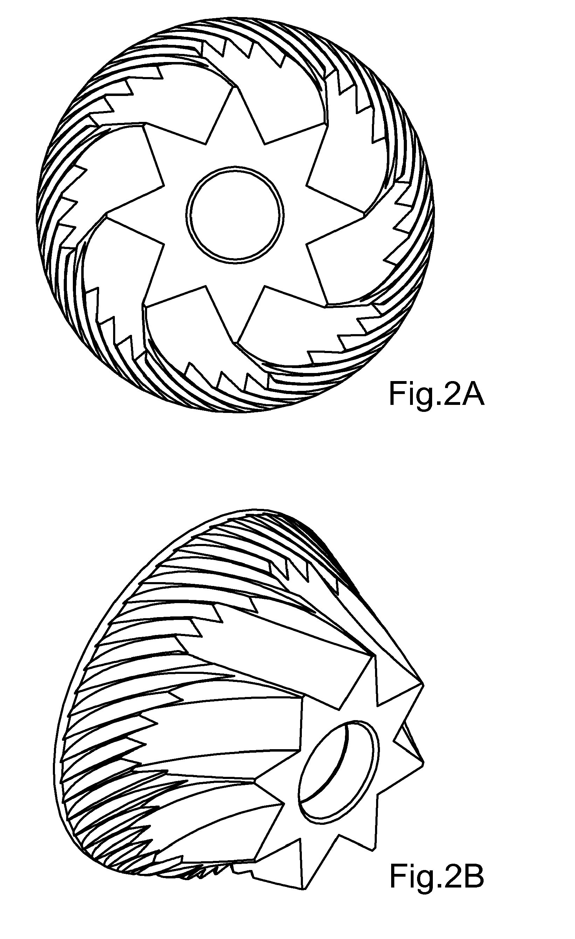

The mill of Fig.2 is a male cone mill. It is obtained from a steel cylinder. It has two toothed regions arranged on a tapered surface: the first toothed region has teeth so arranged and shaped as to crush the coffee beans; the second toothed region has teeth so arranged and shaped as to pulverize the previously crushed coffee beans. Both the teeth in the first toothed region and the teeth in the second toothed region are arranged circumferentially in a contiguous manner; the number of pulverizing teeth (forty-eight in the example of Fig.2) is in particular a multiple (six in the example of Fig.2) of the number of crushing teeth (eight in the example of Fig.2); the first toothed region is closer to the cylinder axis than the second toothed region, being in particular adjacent to the latter. Fig.2 also shows a central hole for mounting the mill.

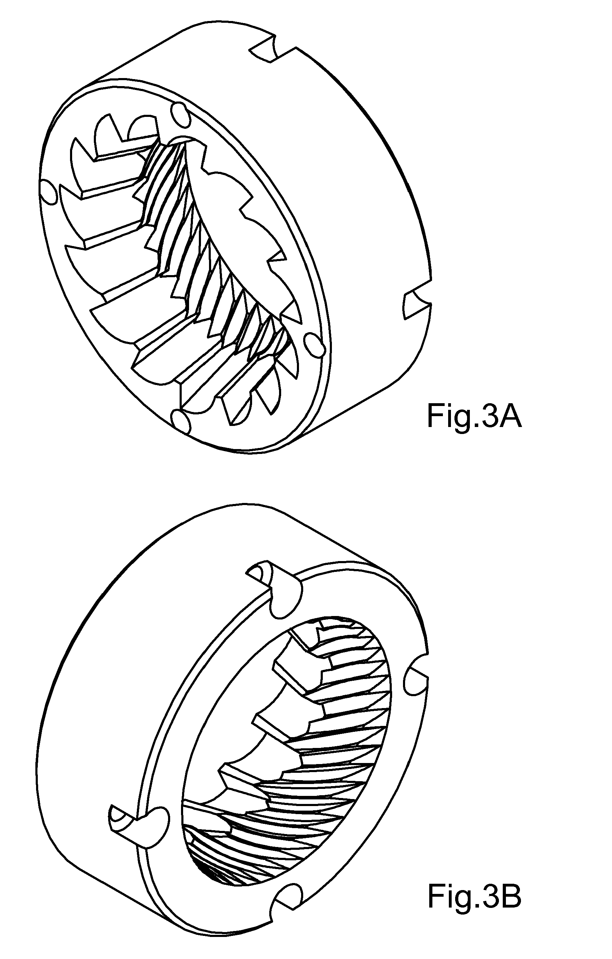

The mill of Fig.3 is similar to the one shown in Fig.2, only differing from the latter in that it is female instead of male; furthermore, the crushing toothed region is farther from the cylinder axis than the pulverizing toothed region; finally, it has a number of small mounting holes (though the mill may be mounted in alternative ways as well).

In coffee grinding apparatuses, a male mill of the type shown in Fig.2 is typically used in association with a female mill of the type shown in Fig.3. Both mills are arranged one into the other, facing each other coaxially, and are reciprocally rotated; coffee beans enter axially from one side through a first annular gap between the two mills, and coffee powder exits axially from the opposite side through a second annular gap between the two mills, thinner than the first one.

Mills like those described and illustrated herein, in particular like the one shown in Fig.1, can advantageously be subjected to the treatment process according to the present invention, thus obtaining a part featuring high resistance to wear and fatigue in its toothed regions, as well as coffee powder of very high quality in terms of powder contents.

By using such a treatment process it will be possible to obtain a mill having a surface layer characterized by particular physical and chemical properties.

According to the present invention, the thickness of said layer will preferably be in the range of 0.1 mm to 1.0 mm, more preferably 0.5 mm to 0.8 mm; of course, since the physical and chemical properties of the material change gradually from the outside to the inside of the part, the values mentioned above should be considered to be approximate and should be interpreted in the light of the knowledge of those skilled in the art of metallurgy.

According to the present invention, the coffee mill is subjected to a treatment process which comprises:
- a gas-quenching step,
   and, as an alternative to or, advantageously, in combination with it:

- a low-pressure case-hardening step;
   the case-hardening step is carried out prior to a quenching step, in particular prior to the gas-quenching step.

Said treatment process is carried out on steel mills; in order to attain good results, the steel used must have a substantially uniform carbon content lower than 0.2 % before the treatment process and, more in particular, before the case-hardening step; in fact, this promotes the migration of carbon from the (rich) surrounding atmosphere to the (lean) part to be case-hardened and its subsequent diffusion therewithin.

If on the one hand the carbon content must be kept low in order to promote case-hardening and preserve the core tenacity of the parts, it is on the other hand appropriate to add alloy elements in order to promote the quenchability of steel.

Alloy elements suitable for the purposes of the present invention are, in particular, manganese [Mn], nickel [Ni], chrome [Cr] and molybdenum [Mo].

These substances should preferably be used, whether individually or combined together, in the following percentages:
- Mn → from 0.40 % to 1.40 %
- Ni → from 0.4 % to 3.20 %
- Cr → from 0.35 % to 1.30 %
- Mo → from 0.15 % to 0.4 %

It is however recommended not to exceed the following maximum values:
- Mn → 2.0 %
- Ni → 5.0 %
- Cr → 2.0 %
- Mo → 0.5 %

The quenching gas is preferably nitrogen (which is a low-cost, easily available substance) or hydrogen (which is a substance having high cooling power) or helium or argon (which are inert substances) or a mixture thereof; the simplest, cheapest and most effective choice is nitrogen or a high nitrogen content mixture. Due to the reasons explained above, it is important to avoid or at least to limit as much as possible the presence of oxygen in the quenching gas.

According to the present invention, the quenching step is carried out by letting the quenching gas flow into a chamber wherein the parts to be quenched have been placed after having been heated (to a temperature higher than AC3, in particular to a temperature higher than the austenitization temperature), so that the temperature of the parts will drop abruptly.

In order to obtain a good and fast cooling, it is necessary that the quenching gas is at high pressure, preferably at a pressure between 5 and 40 bar, more in particular between 10 and 20 bar.

In order to obtain a good and fast cooling, it is necessary that the quenching gas is at low temperature, preferably at a temperature between 0°C and 50°C, in particular at room temperature.

According to the present invention, the case-hardening step is carried out by letting the case-hardening gas flow into a chamber wherein the parts to be case-hardened have been placed.

During said case-hardening step there is typically an high initial pressure reduction in the chamber, in particular to a value between 0.1 mbar (i.e. 10⁻¹ mbar) and 0.0001 mbar (i.e. 10⁻⁴ mbar), more in particular to a value between 0.01 mbar (i.e. 10⁻² mbar) and 0.001 mbar (i.e. 10⁻³ mbar).

The gas used as a carbon carrier during the case-hardening step is typically a hydrocarbon or a mixture of hydrocarbons, in particular propane and/or ethylene and/or acetylene, preferably ethylene and/or acetylene; a mixture containing ethylene, acetylene and hydrogen has proven to be particular effective. Due to the reasons explained above, it is important to avoid or at least to limit as much as possible the presence of oxygen in the case-hardening gas.

The case-hardening step is also typically carried out at high temperature, in particular at a temperature higher than AC3 (preferably at a temperature higher than the austenitization temperature) and lower than 1250°C, more in particular at a temperature between 900°C and 1050°C; in fact, high temperatures promote the solubilization of carbon in the part, and austenite solubilizes carbon particularly well; furthermore, high temperatures promote the initial degassing of the chamber and of the parts.

## Claims

1. Use of a treatment process on coffee mills, wherein said process comprises a gas-quenching step.

2. Use of a treatment process according to claim 1, wherein said mills are made of steel, preferably having a substantially uniform carbon content below 0.2 % prior to said treatment process.

3. Use of a treatment process according to claim 1 or 2, wherein said quenching gas is nitrogen or hydrogen or helium or argon or a mixture thereof.

4. Use of a treatment process according to claim 1 or 2 or 3, wherein said quenching gas is at a pressure between 5 and 40 bar, more in particular at a pressure between 10 and 20 bar.

5. Use of a treatment process according to any of claims 1 to 4, wherein said quenching gas contains substantially no oxygen.

6. Use of a treatment process according to any of claims 1 to 5, wherein said quenching gas is at a temperature between 0°C and 50°C, in particular at room temperature.

7. Use of a treatment process on coffee mills, in particular according to any of claims 1 to 6, wherein said process comprises a low-pressure case-hardening step prior to a quenching step, in particular prior to said gas-quenching step.

8. Use of a treatment process according to claim 7, wherein said mills are made of steel, preferably having a substantially uniform carbon content below 0.2 % prior to said case-hardening step.

9. Use of a treatment process according to claim 7 or 8, wherein said case-hardening step is carried out at high temperature, in particular at a temperature higher than AC3 and lower than 1250°C, more in particular at a temperature between 900°C and 1050°C.

10. Use of a treatment process according to claim 7 or 8 or 9, wherein during said case-hardening step there is an high initial pressure reduction, in particular to a value between 0.1 mbar and 0.0001 mbar, more in particular to a value between 0.01 mbar and 0.001 mbar.

11. Use of a treatment process according to any of claims 7 to 10, wherein said case-hardening step uses hydrocarbons as carbon carriers, in particular propane and/or ethylene and/or acetylene, preferably ethylene and/or acetylene.

12. Use of a treatment process according to any of claims 7 to 11, wherein said case-hardening step does not use any oxygen or oxygen compounds.

13. Coffee mill having a surface layer obtained through a treatment process according to any of claims 1 to 12.

14. Coffee mill according to claim 13, wherein the thickness of said layer is between 0.1 mm and 1.0 mm, preferably between 0.5 mm and 0.8 mm.

15. Coffee grinding apparatus **characterized by** comprising one or more mills according to claim 13 or 14.
